(19) Europäisches Patentamt / European Patent Office / Office européen des brevets

(11) **EP 2 829 111 B1**

(12) **EUROPEAN PATENT SPECIFICATION**

(45) Date of publication and mention
of the grant of the patent:
**02.05.2018 Bulletin 2018/18**

(21) Application number: **13711835.2**

(22) Date of filing: **19.03.2013**

(51) Int Cl.:
*H04W 76/02* *(2009.01)*      *H04W 72/00* *(2009.01)*

(86) International application number:
**PCT/EP2013/000834**

(87) International publication number:
**WO 2013/139472 (26.09.2013 Gazette 2013/39)**

(54) **MEASUREMENT-BASED CONNECTION ADMISSION CONTROL IN PACKET-BASED MOBILE SERVICE NETWORKS**

MESSUNGSBASIERTE VERBINDUNGSZULASSUNGSSTEUERUNG IN PAKETVERMITTELTEN MOBILDIENST-NETZWERKEN

CONTRÔLE D'ADMISSION DE CONNEXION S'APPUYANT SUR DES MESURES DANS DES RÉSEAUX DE SERVICE MOBILE PAR PAQUETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2012 EP 12160189**
**19.03.2012 EP 12160190**

(43) Date of publication of application:
**28.01.2015 Bulletin 2015/05**

(73) Proprietor: **Nokia Solutions and Networks Oy**
**02610 Espoo (FI)**

(72) Inventors:
• **HEEKE, Helmut**
**80687 München (DE)**

• **SCHEFFEL, Klaus**
**41564 Kaarst (DE)**

(74) Representative: **Borgström, Markus et al**
**Nokia Solutions and Networks GmbH & Co. KG**
**T&I IPR Patent Administration**
**St.-Martin-Straße 76**
**80240 München (DE)**

(56) References cited:
**EP-A1- 1 986 455**      **WO-A1-2012/145192**
**WO-A2-2006/042203**      **GB-A- 2 420 050**
**US-A1- 2009 003 206**      **US-A1- 2009 141 731**

**Description**

CROSS-REFERENCE TO RELATED APPLICATIONS

This application claims benefit of priority from European Patent Applications No. 12160190.0 and 12160189.2 both filed March 19, 2012.

BACKGROUND OF THE INVENTION

Field of the Invention

The invention relates to the transport of Guaranteed Bit Rate (GBR) service traffic in packet based Mobile Service Networks. More specifically the invention relates to a method, system, device and computer program product for processing connection requests in a packet based Mobile Service Network and a Mobile Service Network comprising respective means.

Related Art

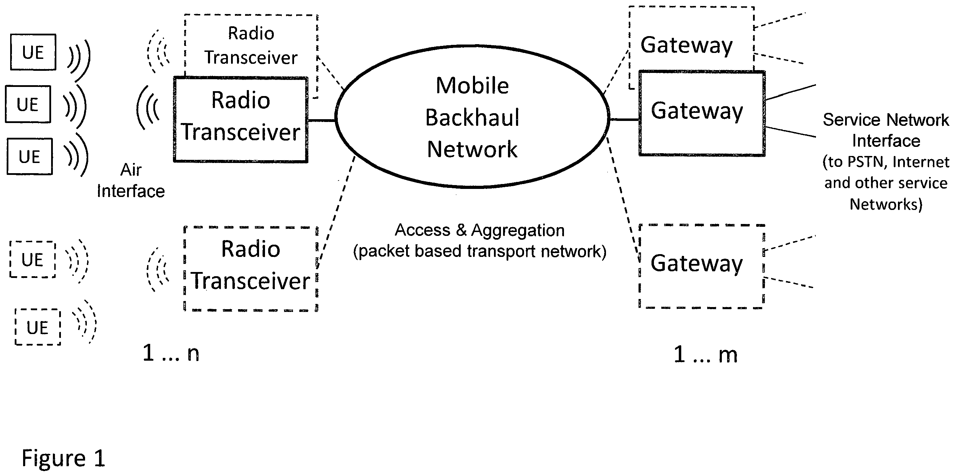

A mobile service network (Figure 1) is a telecommunication network, wherein at least one Radio Transceiver, connected via an access and aggregation network (Mobile Backhaul Network) to at least one Gateway, provides through a radio (or air) interface connectivity between a plurality of (in most cases mobile) subscriber devices (user equipment, UE) among each other and with other (mobile) subscriber devices, servers, or other components or devices (not shown), reachable from the at least one gateway via the Public Switched Telephone Network (PSTN), through the Internet, or using other, potentially dedicated, wired or wireless (fixed or mobile) service networks. Mobile Core Network functions (not shown) may be incorporated in or associated with the mobile service network to support mobility management, to implement operator policies, and to perform service control.

The radio transceiver (RT) may be a base station (BTS), a NodeB, an evolved NodeB (eNodeB) or any equivalent device providing regional (and preferably cellular) radio access using technologies as specified e.g. in the 2G, 3G, 4G/LTE, or other relevant radio standards.

The gateway may be any device, system, or arrangement capable of providing access to other service networks such as, or through, the PSTN, the Internet, or any other kind of application and/or transport service network.

The mobile backhaul network (MBH) may comprise any components and technologies suitable to interconnect radio transceivers and gateways as described above. More recent systems preferably use packet-oriented data transfer and related MBHs preferably use packet based transport with protocols and formats as e.g. specified by Ethernet or Internet Protocol (IP) related standards. Reuse of existing infrastructures and use of off-the-shelf routers and switches enables cost efficient solutions.

The numbers of radio transceivers and gateways do not need to correspond with each other, as there is no fixed relationship between radio transceivers and gateways. The MBH takes care for appropriate routing and switching of traffic in both directions. Individual redundancy concepts may be applied for radio transceivers and gateways.

Architectures, devices, features and functions of packet based mobile service networks have e.g. been specified by the 3rd Generation Partnership Project (3GPP) with numerous standards documents such as e.g. 3GPP TS 23.002 and 3GPP TS 23.401.

In order to assure Quality of Service (QoS) in packet based transport networks, a typical measure applied is Call (or Connection) Admission Control (CAC). The purpose of CAC is to make sure that required transport (and other) resources are available before a connection is set-up. This is most important for real-time traffic as e.g. created by conversational voice and video, or real time gaming applications, which are usually implemented using Guaranteed Bit Rate (GBR) service connections. A simple approach for CAC is book-keeping by adding and subtracting the required bandwidth of all connections set-up and released since system start-up.

In mobile network environments based on 3rd and 4th generation radio technologies such as e.g. specified for Universal Mode Telecommunications System (UMTS) and Long Term Evolution (LTE), 3GPP standards further support QoS by defining, on the air interface, Quality Classes for connections. A QoS Class Identifier (QCI) is signaled to the (e)NodeB ((evolved) Node B), together with the bearer bandwidth required on the air interface with each connection request. Note that the QCI values pertain to the air interface traffic only. The transport network (MBH) uses different mechanisms, different protocols, different priority levels and different definitions of QoS classes based e.g. on the Differentiated Services concept as specified for Internet Protocol (IP) based networks by IETF RFCs 2474, 2475, 3260, and others, or equivalent concepts for Ethernet, MPLS, or other technologies used with packet based transport. The mapping from QCIs to Differentiated Service Code Point (DSCP) values or corresponding traffic class identifiers may be provided and configured by the network operator.

3GPP has assigned QCI values 1, 2, 3, and 4 for use with Guaranteed Bit Rate (GBR) services and specifies related standardized characteristics for packet forwarding through the network (3GPP TS 23.203). For each GBR connection request, a corresponding QCI value is signaled, together with a requested guaranteed bit rate on the air interface. The request can be admitted, if both a Radio Admission Control (RAC) and a Transport Admission Control (TAC) confirm that sufficient resources are available on the air interface and in the transport network, respectively.

The task of the RAC is comparably simple, as the QCI and the bandwidth required are immediately known. Performance requirements are moderate, since the scope is limited to the air interface resources covered by a single radio transceiver.

The task of the TAC is more difficult, since neither the QCI nor the bandwidth requirement signaled for the air interface is immediately applicable to the transport network. In addition the TAC has to keep up with the actual usage of the transport network resources and performance requirements to serve the traffic of multiple radio transceivers.

Whereas the mapping of a QCI to a corresponding traffic class identifier, e.g. a DSCP, in the transport network may be guided by predefined rules, a sufficiently accurate determination of the bandwidth applicable to the transport network is often not possible. In LTE, for example, there are a number of limitations which hinder the TAC in calculating the corresponding transport bandwidth and taking the right admission decisions:

- A key parameter for calculating the overall bandwidth required, namely the user packet size, is not available, neither in the eNodeB, nor anywhere in the area of the transport network. From the requested bit rate on the air interface alone the corresponding transport bit rate cannot be determined. Note that a transport overhead is added to each packet that covers overhead from e.g. GTP-U (a General Packet Radio Service (GPRS) Tunneling Protocol), UDP (User Datagram Protocol), IP (Internet Protocol), IPSec (IP Security), Ethernet, and VLAN (Virtual Local Area Network). Such overhead needs to be added to each packet, so consequently the number of packets (and ideally also their original (user packet) size) needs to be known to finally get the complete transport bandwidth of a connection.

- The QCI assignment specified by 3GPP is not binding. The operator is free to map any kinds of traffic to any QCI, including multiple mappings, like e.g. mapping of all GBR traffic types to QCI=1. With a mix of traffic with different packet sizes (e.g., voice, video, gaming) it is not even possible to determine an average value per QCI class at the moment, when a decision has to be made.

- For voice traffic, the traffic characteristics and the resulting transport overhead depends heavily on the type of voice codec used. This information is not available at the time of connection set-up. The same applies for video traffic, where different types of video codecs may be used.

- Other kinds of traffic may exist in the transport network, which are not classified by a QCI value, but use the same DSCP values as Guaranteed Bit Rate (GBR) traffic. (Example: Timing-over-packet traffic, which usually has the same priority as voice traffic.)

- With insufficient accuracy of the required bandwidth per connection reliable admission decisions are not possible. When e.g. the TAC assumes (due to insufficient accuracy of connection bandwidth requests) that the network is loaded close to its limits, while its load in fact is much lower, connections will be refused even though enough transport capacity is available. This results in a very inefficient usage of resources. An underestimation of the actual load would even be worse, as a potential packet loss could affect all active connections and violate their QoS. Accumulated deficiencies may force the difference to either end.

It is thus obvious, that the traditional CAC approach of book-keeping of bandwidths with all connection set-ups and releases cannot reasonably be applied in the context of inaccurate bandwidth requirement information.

Jamin et al. ("A Measurement-based Admission Control Algorithm for Integrated Services Packet Networks", Proc. of the ACM SIGCOMM 1995) describe a Measurement-based Admission Control (MBAC) algorithm for Integrated Services Packet Networks (ISPN). They conclude that MBAC is well suited for a class of "predictive services" with less stringent delay requirements than guaranteed services, whereas guaranteed services are assumed to run on isolated and dedicated resources. They further state that with traditional approaches to admission control, if related traffic flows are not smooth, i.e. e.g. bursty (and thus in accurate to describe), guaranteed service inevitably results in low (resource) utilization.

In mobile service networks a simple and reasonably accurate estimate of the required transport bandwidth is practically not possible, since, e.g. for LTE, the bit rates on the air interface may vary over two orders of magnitude.

It is thus an objective of the invention to provide an efficient and reliable method for assuring Quality of Service for GBR services in the transport network section (MBH) of a mobile service network in absence of the knowledge of the exact transport network bandwidth requirements of related connection requests.

Prior art which is related to this field of technology can be found e.g. in document GB 2 420 050 A disclosing a WLAN admission control, in WO 2006/042203 A2 disclosing methods and systems for measurement-based call admission control in a media gateway, in US 2009/0141731 A1 disclosing a bandwidth admission control on link aggregation groups, in EP 1 986 455 A1 disclosing a communication of scheduling related information in a mobile communication system, in US 2009/0003206 A1 disclosing a bandwidth-based admission control mechanism, an in post-published WO 2012/145192 A1 disclosing a method of scheduling and admission control for guaranteed bit rate and/or maximum bit rate services.

BRIEF SUMMARY OF THE INVENTION

The object is achieved by a method according to claim 1.

The object is also achieved by a mobile service network according to claim 11. The object is supported by a device, according to claim 7, comprising means to perform any of the steps of the method described above, which may or may not be integrated or colocated with a radio transceiver or a gateway of a mobile service network.

The object is further achieved by a computer program product according to claim 9, which may be embodied as a computer readable medium comprising a non-volatile memory carrying computer-executable instructions, according to claim 10. Further embodiments and favorable developments of the invention are provided with the detailed description below.

BRIEF DESCRIPTION OF THE DRAWINGS

FIG. 1 shows a mobile service network.

FIG. 2 shows the main components involved in the method disclosed and the information transferred between them.

FIG. 3 gives an outline of the inventive method including the information flows and the respective transformations.

FIG. 4 is a block diagram illustrating a first embodiment of the invention.

FIG. 5 is a block diagram of a second embodiment of the invention.

FIG. 6 shows the developing of various measurement counter values over several epochs of measurement time.

FIG.7 shows an alternative approach for evaluating the measurement counter values.

DETAILED DESCRIPTION OF THE INVENTION

The essence of the present invention, called TAC or MB-TAC further on, is an approach based on statistical methods and, despite the warnings of Jamin et al., it includes and proves that methods of Measurement-based Admission Control (MBAC) are applicable and advantageously useable with guaranteed bit rate traffic. Example embodiments are provided to illustrate the principles of the inventive method. However, from the principles illustrated it should be obvious for a person reasonably skilled in the art, that embodiments of the invention are not confined to the exact embodiments as illustrated by the example and that a multitude of variants can be imagined without violating the scope of the invention as defined by the claims.

One part of the concept is to measure the load which is to be controlled by TAC directly on the transport network, and to use the information about the current load for the decision whether to accept or reject a new connection.

Another part is to estimate the expected future load of a new connection brutally by simply multiplying it by a gross overhead factor which absorbs all potential overhead coming from IP, IPsec, etc - a factor which can be most pessimistic for the individual connection. In fact, a real connection, if admitted, will consume (much) less transport capacity than estimated by this "initial estimate" - and this will be detected some short time later by measuring the network load, and used for the decision about the next connection request.

It is immediately clear that such an approach solves the key problems mentioned above: Operators do not need to configure any values they cannot know, like the "expected average packet size per QCI", or "activity factors". MB-TAC relies on measured system behaviour and not on speculations over user traffic or operator configurations. Thus operators may even ignore the recommended 3GPP QCI settings; the approach works for any mapping of traffic types to QCI class. MBTAC further obsoletes any assumptions about codec types (for voice or video). The measurement based algorithm offers the possibility to adapt to the actual network load, resulting in a better network utilization.

Additional traffic with real-time behaviour (like C-plane signalling, or synchronisation traffic) which has no QCI, or a QCI value greater than 4, can be included in the TAC measurements.

Analyzing connection settings is not necessary anymore. MB-TAC simplifies the implementation on transport side because detailed analysis of connection properties (like VLAN, IPsec configuration, etc) can be avoided, because all this can be incorporated in the initial estimate factors. These can be quite pessimistic for a first try, because the really consumed bandwidth is measured afterwards and taken into account in the following decisions.

Deep analysis of IPsec configuration settings is no longer necessary; in particular, there is no need to find out the number of IPsec padding bytes used per IP packet.

MB-TAC improves the performance because the decision algorithm can be computationally fast as it avoids time consuming store-and-retrieval processes and hence it reduces the time for set-up of a connection. It needs not be involved in the release of connections because the freed bandwidth is automatically measured and taken into account afterwards. The measurement can be fast, and the computation overhead is low. At the heart of the MB-TAC is the decision algorithm as described below.

While the former is more an implementation issue - in the context of LTE transport, it deals with identification of traffic via operator IP-addresses, QCI or DSCP values, etc. - the latter warrants essentially the properties of the GBR traffic.

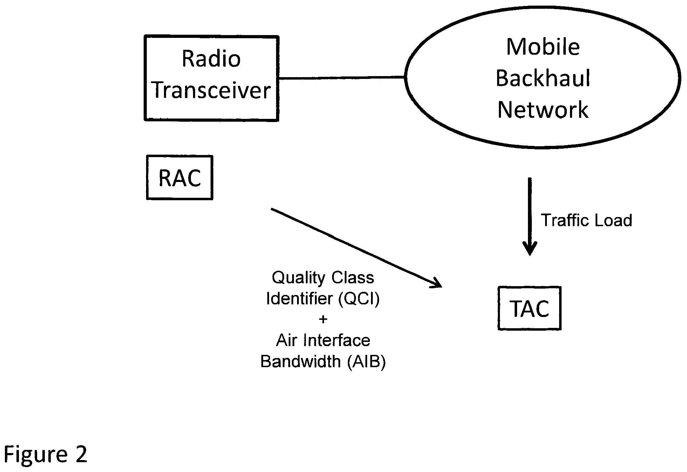

FIG. 2 shows the key components involved in MB-TAC and the exchanged between them. A GBR connection request is forwarded from the radio side (Radio Transceiver and RAC) to the transport network's TAC node, that the drawing should not imply any physical or logical arrangement with respect to the TAC. The connection request comprises the QCI and the bandwidth as requested and allocated on the radio side.Further information with respect to the traffic load in the transport network (Mobile Backhaul Network) is also delivered to the TAC.

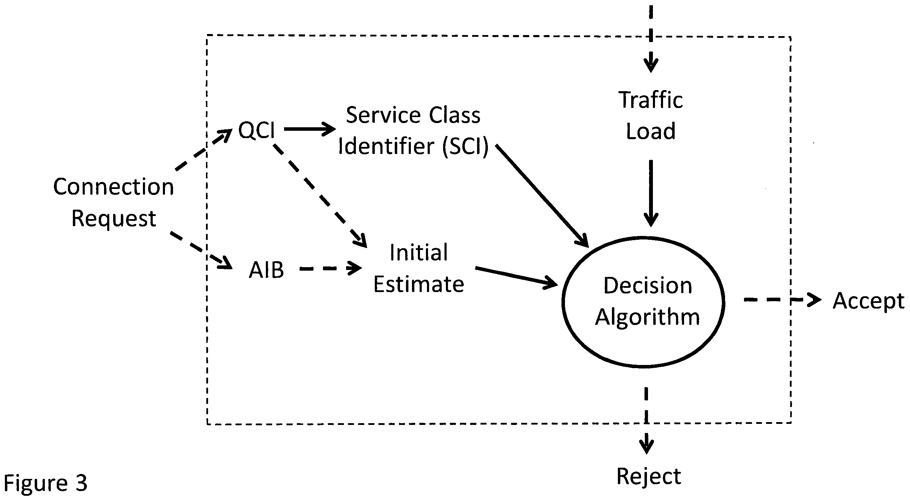

FIG. 3 shows in a simple schematic and, with the knowledge from FIG. 2 and the brief description of the invention as given above, almost self-explaining the basic principles of the inventive method. The principles of the creation of the Initial Estimate and of the Decision Algorithm are explained in more detail below.

As it turns out, a measurement-based TAC is possible when certain assumptions about the underlying traffic statistics hold:

1. The total traffic is the sum traffic of many *statistically independent* sources. This means that it can *approximately* be described by a limit probability distribution.

2. Essentially steady traffic streams, i.e., the sources send more or less continuously; short time intervals where little or nothing is sent is acceptable, as long as they do not last longer than at most several seconds .This allows the measurement unit to provide sufficiently correct measurement results.

3. Stationarity over time, which means that the statistical properties of the traffic generated by a single source are essentially the same over the whole duration of a connection.

The key factor in the design of the algorithm is exactly the fact that "*essentially steady traffic*" is a characteristic of typical GBR (i.e., real-time) traffic sources. The measurement-based TAC algorithm will not work for typical non-real-time traffic sources, like web browsing, emailing, etc.

An additional condition for a statistical approach is *consistent operator configuration.* Essentially, the only parameter an operator has to configure is the requested threshold value for the total GBR sum traffic ("T"). It is trivial that the value for "T" must be greater than the maximum rate of all *individual* connections; in a statistical context, however, "T" must be *much* greater in order to allow sufficiently many connections to the network so that statistical multiplexing becomes effective.

In addition to the basic requirements which are necessary for any statistical admission control algorithm, the MB-TAC has to consider further implementation constraints:

- Performance - the decision whether a new GBR connection can be accepted or not must (in the context of LTE RL50) be made quickly (~ one millisecond). A rationale is that the MB-TAC "sees" the traffic for more than one radio cell; spending the time with handling a request from one cell effectively blocks connection set-ups from all other cells (unless a multi-tasking implementation is used, which would require much more implementation effort). Also, in general a TAC should not consume too much processing performance of transport software. Note that performance requirements pertain to all components of a MB-TAC, decision algorithm and measurement.

- Extreme traffic profiles - in LTE, the requested bandwidth on the air interface may vary between several kilobit/s and up to 6 Mb/s (the resulting bandwidth on the transport network may be substantially higher).

- No control over admitted connections - a GBR connection, once admitted, cannot be removed from the system anymore by TAC. If a connection is falsely admitted to the system, resulting in exceeding the threshold "T", this error cannot be corrected by TAC. Moreover, this condition of being above the threshold can sustain for quite some time (until sufficiently many connections are released by users).

- Source traffic variation - a new GBR connection need not have a constant bit rate, but may contribute to the sum rate variation by a traffic rate variation of its own.

- Additional real-time traffic sources - the measurement for TAC includes additional traffic (synchronisation, C-plane signalling) which contributes to the mean and variance of the measured traffic. This effect is expected low, but cannot completely be ignored (if it could, it would not be included for TAC at all).

- Missing information about the set-up request timing - the exact moment when set-up requests will happen is unknown. Moreover, there may be some kind of onnection set-up pressure: in busy hours, set-up requests may occur with a distance in time of just some milliseconds or even below. If TAC processes one request after the other, it has to be extremely fast. An option is to collect some of them and process them jointly like a single request (see below)..

From the viewpoint of an operator, configuring the MB-TAC is easy --he just sets the threshold value "T", and relies on TAC that it both keeps the sum traffic below "T" and optimizes the resulting network utilization.

Functionally, the MB-TAC performs three activities, namely

- Measuring the total GBR traffic on the transport network
- Giving an "initial estimate" of expected bandwidth for a requested GBR connection
- Deciding about acceptance or rejection

A measurement unit identifies packets belonging to traffic controlled by TAC and sums up the packets lengths. The counter is sampled (and reset) at fixed sampling time points ("epoch time") T1, T2, T3,... (fixed sampling intervals, or measurement interval). From this, the consumed bandwidth per measurement interval is calculated. Epoch times may be around 10 to 50 ms, but could also be smaller or larger.

A "sliding window" is used for the measurement of traffic under TAC control. The last few values of the measured values are stored in a ring buffer, and *at sampling time* (e.g. every $\approx$ 250 or 500ms) the values of

    m := sample mean

    $\sigma$ := sample standard deviation

are calculated for the values in the sliding window.

Lower or larger intervals are possible. Large intervals provide good results, with short intervals processing time for calculation of sample mean and standard deviation is kept low. Note that linear or exponential or any other type of weighting may be applied to prefer more recent samples against older ones.

The InitialEstimate, the estimated bandwidth for a new GBR connection, is brutally calculated by simply multiplying the "maximum requested bit rate on air" by a gross overhead factor $\lambda$,

$$InitialEstimate = \lambda \times maxBitRateOnAir$$

where $\lambda$ is a factor with $\lambda \geq 1$, and may depend on QCI value and/or requested bit rate. It is supposed to include all potential overhead *in worst case,* including possible overhead coming from IP headers (irrespective of IPv4 or IPv6), IPsec, VLAN, Ethernet, etc.

The rule "assume the worst" is followed only for low and medium bit rates (up to ~500 kb/s connections)-taking the worst case for very high bit rate connections (like 6 Mb/s bearers) would result in extremely high values for "T", resulting in a very high rejection rate. For low bit rate connections $\lambda$ may be selected to go up to 5 or 10 or even beyond.

The decision algorithm heavily relies on statistics. For very many statistically independent sources, the probability distribution of the sum GBR traffic follows *approximately* a Gaussian distribution with mean m and standard deviation $\sigma$. It can be concluded that for the sum rate

$$\frac{T - m}{\sigma} > \alpha$$

holds approximately, where $\alpha$ can be determined from a quantile of the Gaussian error function. A good value for $\alpha$ is $\alpha = 6.0$, which corresponds to a probability for the sum rate to exceed the threshold "T" of $10^{-9}$ (in the ideal, Gaussian case). Note that using a much smaller value for $\alpha$ does not really help; e.g. reducing the probability by three orders of

magnitude to $10^{-6}$ corresponds to a value of $\alpha = 4.9$.

If a new connection is accepted, the new sum rate will have a new mean m* and a new σ*, where approximately

$$\mathrm{m^* = m + m_{new\ connection}.}$$

$$(\sigma^*)^2 = \sigma^2 + \sigma^2_{new\ connection}$$

Neither mean nor standard deviation of the new connection is known, but the following inequalities hold *for the lifetime of a connection:*

$$\mathrm{m_{new\ connection}.} \leq \mathrm{peak_{new\ connection}.} \leq (\lambda \times maxBitRateOnAir)$$

and

$$\sigma_{new\ connection} \leq 0.5 \times m_{new\ connection}. \leq 0.5 \times (\lambda \times maxBitRateOnAir$$

Since it is a main design goal not to exceed the configured threshold T, the worst case is assumed, and a simple decision criterion would be
"set s = $\lambda \times maxBitRateOnAir,$ and accept a new connection if

$$\frac{T - (m + s)}{\sqrt{\sigma^2 + \beta \times s^2}} > \alpha$$

holds" (where β=0.25).

However, this formula ignores contributions of previous connections that were accepted shortly before the connection at hand are captured by the measurement process only some time later. This effect is exacerbated because it is not known *when* user traffic from accepted connections actually enters the network. (It is not even known at decision time whether they will produce any traffic at all, because a connection set-up request may be aborted even if RAC and TAC accepted it.)

MB-TAC copes with this situation by memorizing how much (estimated) traffic it admitted since one of the last few epoch times, including the connections it admitted in the current time interval-this value is "AC" (admitted connections). All those connections are summarily treated as "one big" connection, which results in the final

**Decision criterion (single source set-up request)**

Set s = $\lambda \times maxBitRateOnAir,$ and accept a new connection if

$$\frac{T - (m + s + AC)}{\sqrt{\sigma^2 + \beta \times (s^2 + AC^2)}} > \alpha$$

Otherwise reject it.

Here, α and β are made parameters. Default values are α=6.0 and β=0.25. "m" and σ are *estimated* using the sample mean and standard deviation of the measurement sliding window.

Note that the rationale for the decision algorithm is only heuristic. (More precisely, it is correct only in the limiting case of infinitely many connections, and ideal measurement processes.) A "proof' that the algorithm actually works in practice comes from simulations.

As mentioned above, the operator must configure "T" so that it is "much" greater than the maximum possible peak rate of an individual connection. The decision criterion permits to specify it more precisely.

In an empty network, m, σ, and AC are zero (additional measured traffic like signalling etc is ignored for a moment). In this case, a new connection is accepted only when

$$T \geq s \times (1 + \alpha\sqrt{\beta})$$

With the default settings for $\alpha$=6.0 and $\beta$=0.25, T must be greater than 4×s (= 4×$\lambda$×maxBitRateOnAir); otherwise, the requested connection will be rejected.

Note that this behaviour is generally *not* due to the algorithm but has to be expected for *any* statistical approach. A certain part of the available transport capacity has to be reserved in order to cope with all the uncertainties discussed. For the MB-TAC, this reserve depends in particular on "s" and automatically acts like a kind of filter-smaller bit rate connections are preferred over higher bit rate connections. An attempt to "optimize" acceptance of high bit rate connections necessarily leads to a much higher probability of exceeding the threshold "T" (unless additional information is available, or one of the design constraints is violated).

Further options are:

- to include release candidates. The C-plane requests not only set-up of GBR connections, but informs TAC at the same time about (potential) release of connections. As a consequence, the algorithm has to take into account that bandwidth consumed by those release candidates *may* become available at some (unknown) time in the near future. In order to find a good estimate for the freed bandwidth, the originally requested *maxBitRateOnAir* for that connection is stored, and the estimate is calculated by simply multiplying it by a gross factor $\mu$ (with $0 \leq \mu \leq 1$). In analogy to the $\lambda$ factor, $\mu$ could be made dependent on *maxBitRateOnAir* and QCI class; for ease of implementation, $\mu$ is simply chosen to be a constant.

- to include C-plane requests in form of lists containing both set-up and release candidates.This can in principle be achieved by repeatedly applying the decision algorithm to the individual connections in the list. This issue is further complicated, when an "all-or-nothing" mode (*all* set-up candidates in the list are rejected if at least one of them is rejected), and a "partial mode" (all individual set-up candidates for which transport resources are available, potentially at the cost of releasing some or all of the release candidates) is introduced..

A much better processing performance can be achieved if the decision rule is modified so that it is (a) applicable to a list of set-up candidates, and (b) incorporates the selection process among release candidates. Based on a reasoning that is analogous to the design of the decision rule, this results in a refined decision algorithm.

---

### Decision algorithm (all-or-nothing mode)

**Input (from C-plane):**

a list of "k" GBR set-up candidates with *estimated* bandwidth ($s_1$, $s_2$, $s_3$, ... $s_k$),

and "j" release candidates which free *estimated* bandwidth ($r_1$, $r_2$, $r_3$, ... $r_j$) when released.

Here, the estimates are calculated via

$s_1$ = $\lambda$×maxBitRate of set-up candidate $s_1$, etc

$r_1$ = $\mu$×maxBitRate of release candidate $r_1$, etc

Calculate an intermediate value "R" via

$$R = \alpha \times \sqrt{\sigma^2 + \beta \times \left(S_1^2 + S_2^2 + ... + S_k^2 + AC^2\right)} - \left\{T - m - \left(S_1 + S_2 + ... S_k + AC\right)\right\}$$

IF  R < 0 THEN :

accept all connection set-up requests,

release no release candidates

update AC

ELSE

IF {R- ($r_1$+ $r_2$+ $r_3$+... + $r_n$)} < 0  (n<=j)

accept all connection set-up requests,

release all release candidates ($r_1$, $r_2$, $r_3$,... $r_n$)

update AC

ELSE

reject all connection set-up requests,

release no release candidates

<u>Note:</u>

In this context, "release" actually means "inform C-plane that connection shall be released from TAC point of view.

---

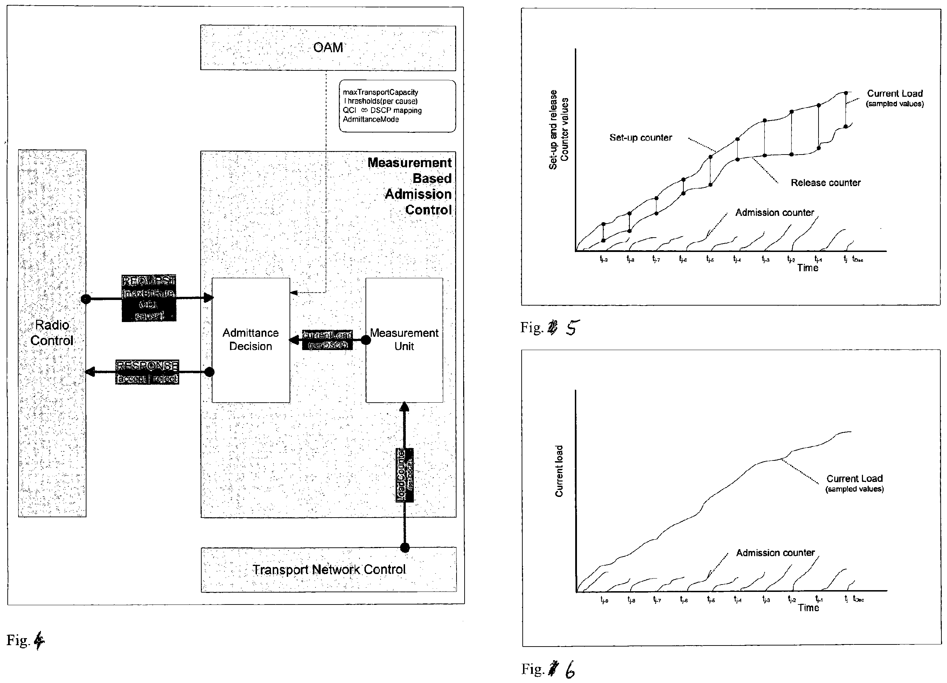

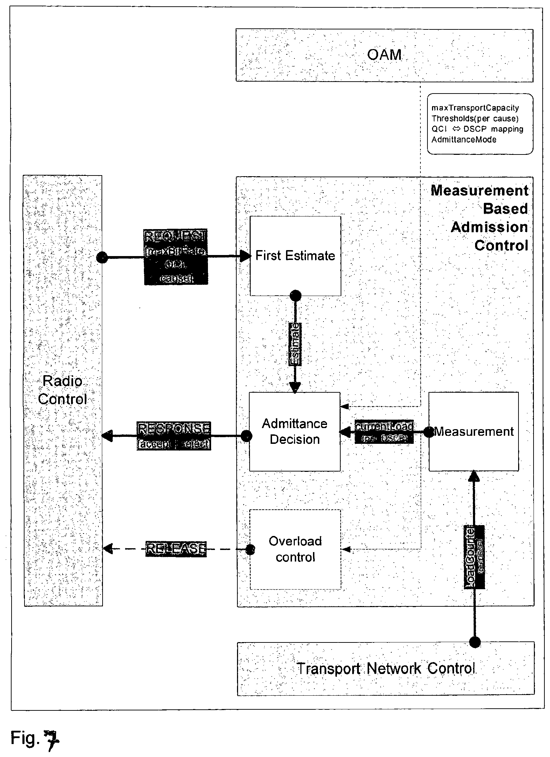

Figure 4 shows an example solution. A further option is shown in Figure 7. RadioControl requests set-up of a new connection, and delivers the associated parameters maxBitRate (= the bit rate on the air interface), QCI value, and cause (= one of normal, handover, or emergency connection) to the MBAC unit. The MBAC unit responds by either accepting or rejecting the request.

The MBAC unit of figure 4 consists of the following sub-units:

- Measurement Unit
- Admittance Decision.

The MBAC unit of Figure 7 additionally includes a unit for the first estimate and another one for overload control.

Measurement Unit:

This unit measures the current network load by inspecting and counting packets of existing connections at the egress/ingress point of the eNB. This has to be done per DSCP (the mapping between QCI and DSCP is used in order to separate GBR from nonGBR traffic).

In practice, an easy way to implement this is to use two internal counters, one counting the bit rates for connections that were set-up, the other one for connections released. See Figure 2 for the measurement principle. Note that both counters strictly increase over time, and the values for the set-up counter are always higher than the value for the release-counter (because connections can be released only if they have been set-up before.)

These counters are sampled at fixed time-intervals, their difference *"currentLoad$_{time=Tj}$"* is the current load on the network (at sampling time $t_j$, and measured per DSCP value).

The MeasurementUnit delivers to the AdmittanceDecisionUnit the value of currLoad$_j$ := Max {currentLoad$_{time=Tj}$, currentLoad$_{time=Tj-1}$, currentLoad$_{time=Tj-2}$, ..., currentLoad$_{time=Tj-\rho}$}, where $\rho$ is a fixed value. currLoad is the maximum value of the last $\rho$ values of the sampled currentLoad.

Notes:

- The basic measurement mechanism for counting packets at the eNB egress and ingress point is assumed to be available in existing shapers/schedulers.
- Measurement has to include IPsec overhead.
- Internal parameters (not operator-configurable): sampling rate.

Admittance Decision:

This unit makes the decision whether to accept or reject the new connection, essentially by estimating the expected load if new connections are accepted, and comparing the estimate to a threshold value configured by the operator. The threshold value depends on the cause (normal, handover, or emergency call) in order to allow different priorities for the acceptance of a new connection.

The unit perfoms the following steps (in order):

(1) Initial estimate:

RadioControl delivers to MBAC a list of connections to be established, and a list of pre-emption candidates that will probably be released by RadioControl. (The list of pre-emption candidates may be empty.) With each connection in the lists, it delivers the associated QCI value, and the maximum bit rate on the air interface. (Additional parameters, like cause etc, may be added.)

The initial estimate shall be calculated (depending on QCI values) by

$$\text{InitialEstimate}_{QCI} = \lambda_{QCI} \times \text{Sum(maxBitRatsOf SetUpConnections)}$$
$$- \mu_{QCI} \times \text{Sum (maxBitRates of release candidates)}$$

where $\lambda$ and $\mu$ are two factors with $\lambda \geq \mu \geq 1$ (depending on QCI value; possibly operator configurable). In practice, $\lambda$ will be much higher than $\mu$ (several 100 percent of overhead), while $\mu$ will be close to a factor of 1.

(2) Decision:

The decision unit keeps internal "Admission Counter(s)" per DSCP value which are reset to zero whenever the counters from the measurement are sampled. The "Admission Counter" sums up the values of the InitialEstimates for those requests that have been accepted since the last sampling epoch time. (Cf figure 5. Note that the involved counters measure different physical entities: currLoad is essentially the maximum of the actual bandwidth consumed by the existing connections since the last few seconds, AdmissionCounter gives an estimate of bandwidth consumed since the last sampling time epoch, not knowing whether those connections do actually exist or not.)

At decision time $T_{Dec}$ (cf figure 5), the DecisionUnit takes the value of $currLoad_j$, and performs in nuce the following algorithm:

IF ($currLoad_j$ + InitialEstimate + AdmissionCounter$_{time=Tdec}$ > Threshold) THEN reject request
ELSE {accept request and add InitialEstimate to AdmissionCounter}

Threshold is an operator defined value which may depend on additional parameters, like cause; see the following discussion.

In a practical implementation, the comparison to the threshold values will probably be made cause-dependant, in order to establish different priorities among calls. The following discusses this aspect.

Two modes of operation for the Admittance Decision Unit are supported:

- Reservation-per-DSCP: the operator configures transport capacity, and cause-dependent thresholds for each DSCP value separately; this permits tight control over the traffic, at the cost of totally separating traffic capacity (bandwidth allocated to a DSCP can be used only by the associated traffic, free bandwidth cannot be allocated to another kind of traffic)

- Reservation-per-GBR: the operator configures transport capacity, and cause-dependent thresholds common for all kinds of GBR traffic; available bandwidth is shared among all kinds of traffic with QCI=1,2,3,4.

For the different modes of operation the following decision algorithms are preferably performed :

- Mode = Reservation-per-DSCP:

    1. from QCI value, get corresponding DSCP value
    2. get currentLoad for this DSCP value
    3. get threshold-value for this DSCP value, and the cause
    4. Decide according Decision algorithm (see above)

- Mode = Reservation-per-GBR:

    1. Calculate S := Sum($currLoad_j$ over all DSCP values) + InitialEstimate + Sum(AdmissionCounters$_{time=Tdec}$ over all DSCP values)
    2. get threshold-value for the cause (which is common for all GBR traffic)
    3. Decide: IF (S) > Threshold THEN reject new GBR connection
    ELSE {accept request and
    set AdmissionCounter =
    AdmissionCounter+InitialEstimate}

Example for Mode = Reservation-per-DSCP (with arbitrary values):

An operator connects eNBs via a 100 Mb/s transport network, and wishes to use up to 20 Mb/s for GBR traffic (having QCI values = 1,2,3,4). He configures the mapping of QCI values to DSCP values like follows:

| QCI | DSCP (PHB) |
|-----|------------|
| 1 | 46 (=EF) |
| 2 | 38 (=AF43) |
| 3 | 38 (=AF43) |
| 4 | 46 (=EF) |

The operator wishes to tightly control the traffic, so he decides for Mode = Reservation-per-DSCP. For traffic with DSCP=46, he wishes to reserve part of the bandwidth for emergency calls; for all DSCP classes, he reserves head room for handover connections. He also wishes to keep a 2% portion of the network capacity (for DSCP=46 traffic) available for other kinds of traffic which are not under control of CAC (like timing-over-packet traffic, which is assumed to be mapped to DSCP=46 also). He configures:

| DSCP (PHB) | Transport Capacity | Threshold_normal | Thr._handover | Thr._emergency |
|---|---|---|---|---|
| 46 (=EF) | 14 Mb/s | 80% (= 11.2 Mb/s) | 90% (= 12.6 Mb/s) | 98% (=13.72 Mb/s) |
| 38 (=AF43) | 6 Mb/s | 95% (= 5.7 Mb/s) | 100% (= 6 Mb/s) | 100% (= 6 Mb/s) |
| (Note that the threshold values are given in percentage of available bandwidth, and required to be in increasing order.) | | | | |

Set-up of a new connection is requested with maxBitRate=100kb/s, cause=handover, and QCI=1. The value of $currentLoad_{DSCP=46}$ is 12.362 Mb/s (=88,3 % of available transport capacity). The InitialEstimate for this new connection is (assuming a factor of 2.5 for traffic with QCI=1) 0.25 Mb/s. Since the last sampling of the load counters, a couple of other connections with an estimate of together 0.6 Mb/s have been accepted for DSCP=46, so $AdmissionCounter_{DSCP=46}$ = 0.6 Mb/s, or 4.286 % of capacity. The decision is

1. from QCI value, get corresponding DSCP value $\Rightarrow$ QCI=1, hence DSCP=46
2. get currLoad for this DSCP value $\Rightarrow$ $currLoad_{DSCP=46}$ = 88.3 %
3. get threshold-value for this DSCP value and cause $\Rightarrow$ $Thr\_handover_{DSCP=46}$ = 90 %
4. get InitialEstimate $\Rightarrow$ $InitialEstimate_{QCI=1}$ = 0.25 Mb/s, or 1.786 % of capacity
5. get AdmissionCounter $\Rightarrow$ $AdmissionCounter_{DSCP=46}$ = 0.6 Mb/s, or 4.286 % of capacity
6. Since (InitialEstimate + currLoad + AdmissionCounter) is 94.374 % and > $Thr\_handover_{DSCP=46}$, the new connection is rejected

Example for Mode = Reservation-per-GBR (with arbitrary values):

An operator connects eNBs via a 100 Mb/s transport network, and wishes to use up to 20 Mb/s for GBR traffic (having QCI values = 1,2,3,4). He configures the mapping of QCI values to DSCP values like follows:

| QCI | DSCP (PHB) |
|---|---|
| 1 | 46 (=EF) |
| 2 | 38 (=AF43) |
| 3 | 38 (=AF43) |
| 4 | 46 (=EF) |

The operator decides for Mode = Reservation-per-GBR, because he wishes to consume the whole capacity for GBR traffic without distingushing QCI/DSCP values. He reserves part of the bandwidth for emergency calls and for handover connections. He also wishes to keep a 1% portion of the network capacity available for other kinds of traffic which are not under control of CAC (like timing-over-packet traffic, which is assumed to be mapped to DSCP=46 also). He configures:

| TransportCapacity | Threshold_normal | Thr._handover | Thr._emergency |
|---|---|---|---|
| 20 Mb/s | 80% (= 16 Mb/s) | 90% (= 18 Mb/s) | 99% (= 19.8 Mb/s) |

Set-up of a new connection is requested with maxBitRate=100kb/s, cause=handover, and QCI=1. The value of $currentLoad_{DSCP=46}$ is 16.362 Mb/s), and $currentLoad_{DSCP=38}$ is 1,264 Mb/s), which sums up to 17.626 Mb/s or 88,13 % of total transport capacity. The InitialEstimate for the new connection is (assuming a factor of 2.5 for traffic with QCI=1) = 0.25 Mb/s. Since the last sampling of the load counters, a couple of other connections with an estimate of together 0.6 Mb/s have been accepted (for both DSCP=46 and DSCP=38), so $AdmissionCounter_{DSCP=46}$ = 0.6 Mb/s, or 3.0 % of capacity. The decision is

1. get currentLoad $\Rightarrow$ currLoad = 88.13 %
2. get threshold-value for this caused Thr_handover = 90 %
3. get InitialEstimate $\Rightarrow$ $InitialEstimate_{QCI=1}$ = 0.25 Mb/s, or 1.25 % of capacity

4. get AdmissionCounters $\Rightarrow$ Sum of AdmissionCounter$_{SDSCP=46 \text{ and } 38}$ = 0.6 Mb/s, or 3.0 % of capacity

5. Since (InitialEstimate + Sum(currLoads) + Sum of AdmissionCounters$_{DSCP=46 \text{ and } 38}$) is 92.38 % and < Thr_handover, the new connection is rejected

Notes:

- The highest threshold (Thr_emergency) may be used to provide an additonal security margin against short-term overload of the network. In practice, operators would be advised to use a value for this threshold of less than 100%.

The invention is further illustrated by another, slightly different embodiment using basically the same application data.

Again, the measurement unit measures the current network load by inspecting and counting packets of existing connections at the egress/ingress point of the eNB. This has to be done per DSCP; the mapping between QCI and DSCP is used in order to separate GBR from nonGBR traffic. Note that the measurement has to include IPsec overhead.

Again the counters are sampled at fixed time-intervals; their difference between sampling time points current-Load$_{time=Tj}$ - currentLoad$_{time=Tj-1}$"

is the current load on the network, measured at sampling epoch time $t_j$ (per DSCP value).

The Measurement Unit delivers to the Admittance Decision Unit the value of

$$\text{currLoad}_j \; := \; \text{Max} \; \{ \; \text{currentLoad}_{time=Tj}, \; \text{currentLoad}_{time=Tj-1}, \; \text{currentLoad}_{time=Tj-2}, \; ...,$$

$$\text{currentLoad}_{time=Tj-\rho}\}$$

where $\rho$ is a fixed value. currLoad is the maximum value of the last $\rho$ sample values of currentLoad.

Admittance decision:

This unit makes the decision whether to accept or reject the new connection, essentially by estimating the expected load if new connections are accepted, and comparing the estimate to a threshold value configured by the operator. The threshold value depends on the cause (normal, handover, or emergency call) in order to allow different priorities for the acceptance of a new connection.

The unit performs the following steps (in order):

Step 1: Initial estimate:

Radio Control delivers to MBAC a list of connections to be established, and a list of pre-emption candidates that will probably be released by Radio Control. (The list of pre-emption candidates may be empty.) With each connection in the lists, it delivers the associated QCI value, the maximum bit rate on the air interface, and the cause[1]. (Additional parameters may be added.)

[1] As an alternative of sending the parameters for the release candidates, these values could be stored when the respective connections were set-up.

The initial estimate shall be calculated (depending on QCI values) by

$$\text{InitialEstimate}_{QCI} = \lambda_{QCI} \times \text{Sum(maxBitRatsOf SetUpConnections)}$$

$$- \mu_{QCI} \times \text{Sum (maxBitRates of release candidates}$$

where $\lambda$ and $\mu$ are two factors with $\lambda \geq \mu \geq 1$ (depending on QCI value; possibly operator configurable). In practice, $\lambda$ will be much higher than $\mu$ (may be several 100 percent of overhead), while $\mu$ will be close to a factor of 1.

Step 2: Decision:

The decision unit keeps internal "Admission Counter(s)" per DSCP value which are reset to zero whenever the counters from the measurement are sampled. The "Admission Counter" sums up the values of the InitialEstimates for those requests that have been accepted since the last sampling epoch time (cf figure 6). Note that the involved counters measure different physical entities: currLoad is essentially the maximum of the actual bandwidth consumed by the existing connections since the last few seconds, while AdmissionCounter gives an estimate of bandwidth consumed since the last sampling time epoch, not knowing whether those connections do actually exist or not.

The decision unit remembers the last $\sigma$ values of the admission counters at epoch time, i.e. the set of {AdmissionCounter$_{time=tj}$, AdmissionCounter$_{time=tj-1}$, ..., AdmissionCounter$_{time=tj-\sigma}$}

At decision time $T_{Dec}$ (cf figure 3), the Decision Unit performs the following algorithm:

Step 1: from QCI value, get the corresponding DSCP value

Step 2: with the respective counters for this DSCP, calculate the value of S defined by

$$S := currLoad_{t_j} + InitialEstimate + AdmissionCounter_{time=t_{Dec}} + \sum_{i=0}^{\sigma} AdmissionCounter_{time=t_{j-i}}$$

Step 3: depending on the connection cause, get the OAM parameter Threshold$_{cause}$

Step 4: decide
IF (S > (Thresholdcause - $\Delta$sec) THEN reject request
ELSE
{accept request;
add InitialEstimate to AdmissionCountertime=Tdec
}
where $\Delta_{sec}$ is an internal parameter (a constant value).

Step 5: continue with next request

Notes on implementation Details:

Measurement unit:

The basic measurement mechanism for counting packets very close at the egress and ingress point is already in place in the NSN transport shaper/scheduler.

Decision unit:

Admittance Mode:

In practice there may be a use case where all GBR connections should be treated the same, irrespective of their DSCP value. An operator should be able to define this behaviour by an OAM parameter modes of operation. Depending on this parameter, the following decision algorithms shall be performed:

5. Mode = Reservation-per-DSCP: distinguish DSCP values and decide according to decision algorithm specified above

6. Mode = Reservation-per-GBR: ignore the DSCP values for GBR connections, i.e., use only one counter for currentLoad, and one counter for AdmissionCounter. Apply the same decision algorithm.

Internal parameters:

The algorithm uses a few internal (not operator-configurable) parameters, namely

1. Sampling rate
2. $\rho$
3. $\sigma$
4. $\lambda_{QCI}$
5. $\mu_{QCI}$
6. security margin $\Delta_{sec}$

In a practical implementation, guidelines for the selection of those values are:

- A critical value is the expected delay that it takes to actually set-up or release a connection in the LTE system-in particular the time from the admission of a connection until the additional bandwidth is actually measured. From the design of the algorithm that can happen only after the next sampling epoch (or later). The value of $\sigma$ allows to control this effect.
  In practice, a good choice is to have the sampling period time larger than this delay (which means that the new connection is guaranteed to be active after the next sampling epoch!), and chose for $\sigma$ a value of 0. Then, "S" becomes simply S = InitialEstimate + currLoad$_{time=Tj}$ + AdmissionCounter$_{time=Tj}$ + AdmissionCounter$_{time=Tdec}$
  Assuming a value of 250 ms for the time it takes the LTE system to establish a connection, a practical value for the sampling time would be $\sim$500 msec.

- The value for $\rho$ determines essentially how quickly the decision algorithm adapts to the variation of the transport net load. A small value (p = 0) means that the network load is tracked with each epoch time; to smooth out short-term fluctuations and to ease the operator's nerves a larger value could be used. Needs to be determined with real field data.

- The values for $\lambda_{QCI}$ and $\mu_{QCI}$ should be based on a (pretty pessimistic) estimation about the expected overhead for a new connection. The values could be made OAM parameters in order to give the operators some flexibility.

- The value of security margin $\Delta_{sec}$ is inferred from simulations; it is a constant value.

OAM parameters:

1. TransportCapacity
2. Mapping of QCI $\Rightarrow$ DSCP
3. Threshold_normal
4. Thr._handover
5. Thr._emergency
6. modes of operation = [Reservation-per-DSCP | Reservation-per-GBR]

   (a) Reservation-per-DSCP: the operator configures transport capacity, and cause-dependent thresholds for each DSCP value separately; this permits tight control over the traffic, at the cost of totally separating traffic capacity (bandwidth allocated to a DSCP can be used only by the associated traffic, free bandwidth cannot be allocated to another kind of traffic)
   (b) Reservation-per-GBR: the operator configures transport capacity, and cause-dependent thresholds common for all kinds of GBR traffic; available bandwidth is shared among all kinds of traffic with QCI=1,2,3,4.

Note that the OAM parameters (1) ... (5) already exist in RL30/RL40.

Example:

EXAMPLE for Mode = Reservation-per-DSCP (with arbitrary example values)
An operator connects eNBs via a 100 Mb/s transport network, and wishes to use up to 20 Mb/s for GBR traffic (having QCI values = 1, 2 , 3 , 4). He configures the mapping of QCI values to DSCP values like follows:

| QCI | DSCP (PHB) |
|-----|------------|
| 1 | 46 (=EF) |
| 2 | 38 (=AF43) |
| 3 | 38 (=AF43) |
| 4 | 46 (=EF) |

The operator wishes to tightly control the traffic, so he decides for Mode = Reservation-per-DSCP. For traffic with DSCP=46, he wishes to reserve part of the bandwidth for emergency calls.For all DSCP classes, he reserves head room for handover connections. He also wishes to keep a 2% portion of the network capacity (for DSCP=46 traffic) available for other kinds of traffic which are not under control of CAC (like timing-over-packet traffic, which is assumed to be mapped to DSCP=46 also). He configures:

| DSCP (PHB) | TransportCapacity | Threshold_normal | Thr._handover | Thr._emergency |
|---|---|---|---|---|
| 46 (=EF) | 14 Mb/s | 80% (= 11.2 Mb/s) | 90% (= 12.6 Mb/s) | 98% (=13.72 Mb/s) |
| 38 (=AF43) | 6 Mb/s | 95% (= 5.7 Mb/s) | 100% (= 6 Mb/s) | 100% (= 6 Mb/s) |
| (Note that the threshold values are given in percentage of available bandwidth, and required to be in increasing order.) | | | | |

Set-up of a new connection is requested with maxBitRate=100kb/s, cause=handover, and QCI=1. The value of $currLoad_{DSCP=46}$ is 12.362 Mb/s (=88,3 % of available transport capacity). The InitialEstimate for this new connection is (assuming a factor of 2.5 for traffic with QCI=1) 0.25 Mb/s. Since the last sampling of the load counters, a couple of other connections with an estimate of together 0.2 Mb/s have been accepted for DSCP=46, so $AdmissionCounter_{DSCP=46, time=Tdec}$ = 0.2 Mb/s; the value of the Admission counter at last epoch time[2] was 0.4 Mb/s, so that the values for the admitted bandwidth sum up to 0.6 Mb/s or 4.286 % of capacity. The decision is

1. from QCI value, get corresponding DSCP value $\Rightarrow$ QCI=1, hence DSCP=46
2. get currLoad for this DSCP value $\Rightarrow currLoad_{DSCP=46}$ = 88.3 %
3. get threshold-value for this DSCP value and cause $\Rightarrow Thr\_handover_{DSCP=46}$ = 90 %
4. get InitialEstimate $\Rightarrow InitialEstimate_{QCI=1}$ = 0.25 Mb/s, or 1.786 % of capacity
5. get AdmissionCounter values
$\Rightarrow AdmissionCounter_{DSCP=46, time=Tdee} + AdmissionCounter_{DSCP=46, time=Tj}$ = 0.6 Mb/s, or 4.286 % of capacity
6. Since (S) is 94.374 % and > $Thr\_handover_{DSCP=46}$, the new connection is rejected EXAMPLE for Mode = Reservation-per-GBR (with arbitrary values)

An operator connects eNBs via a 100 Mb/s transport network, and wishes to use up to 20 Mb/s for GBR traffic (having QCI values = 1, 2, 3, 4). He configures the mapping of QCI values to DSCP values like follows:

| QCI | DSCP (PHB) |
|---|---|
| 1 | 46 (=EF) |
| 2 | 38 (=AF43) |
| 3 | 38 (=AF43) |
| 4 | 46 (=EF) |

[2] This example assumes a value of $\sigma$ = 0 (invisible to the operator)

The operator decides for Mode = Reservation-per-GBR, because he wishes to consume the whole capacity for GBR traffic without distinguishing QCI/DSCP values. He reserves part of the bandwidth for emergency calls and for handover connections. He also wishes to keep a 1% portion of the network capacity available for other kinds of traffic which are not under control of CAC (like timing-over-packet traffic, which is assumed to be mapped to DSCP=46 also). He configures:

| TransportCapacity | Threshold_normal | Thr._handover | Thr._emergency |
|---|---|---|---|
| 20 Mb/s | 80% (= 16 Mb/s) | 90% (= 18 Mb/s) | 99% (= 19.8 Mb/s) |

Set-up of a new connection is requested with maxBitRate=100kb/s, cause=handover, and QCI=1. The value of $currLoad_{DSCP=46}$ is 16.362 Mb/s), and $currentLoad_{DSCP=38}$ is 1,264 Mb/s), which sums up to 17.626 Mb/s or 88,13 % of total transport capacity. With the same values as in the previous example, the decision is

1. get currentLoad $\Rightarrow$ currLoad = 88.13 %
2. get threshold-value for this cause$\Rightarrow Thr\_handover$ = 90 %
3. get InitialEstimate $\Rightarrow InitialEstimate_{QCI=1}$ = 0.25 Mb/s, or 1.25 % of capacity
4. get AdmissionCounter values
$\Rightarrow AdmissionCounter_{DSCp=46/38, time=Tdec} + AdmissionCounter_{DSCP=46/38, time=Tj}$ = 0.6 Mb/s, or 3.0 % of capacity

5. Since (S) is 92.38 % and > Thr_handover, the new connection is rejected

Notes:

- Again the highest threshold (Thr_emergency) may be used to provide an additional security margin against short-term overload of the network. In practice, operators would be advised to use a value for this threshold of less than 100%.

- The measurement and decision algorithm may be based on measurement of additional system resources, like CPU load, memory consumption, air interface load, or other system resources.

- Coupling of factors for initial estimate on network load (or further system resources, like CPU load, memory consumption, etc).

Key advantages of using MBAC are:

1. It provides a solution at all to the problems associated with introduction of QCI=1, 2, 3, and 4 traffic. More general, it allows to effectively perform CAC in any environment where QoS is required, like LTE and WCDMA.

2. It relies on measured system behavior, and not on speculations over user traffic or operator configurations.

3. MBAC avoids the key problem that a key parameter (packet size per traffic class and per UE) is not available in the eNB. In particular, MBAC does not force the operator to configure speculative values like the "expected average packet size per QCI", which they cannot know at all.

4. MBAC works for any kinds of mapping of traffic types to any QCI class, including multiple mappings like e.g. mapping of all traffic types to QC1=1.

5. MBAC avoids any assumptions about codec types (for voice or video)

6. MBAC permits sufficient accuracy of the transport bandwidth estimation

7. MBAC avoids the introduction of an activity factor (which is nearly useless when QCI=1, 2, 3, and 4 are used, because this factor essentially reflects user behavior in voice calls, and is not applicable for other kinds of traffic or in cases of traffic mix)

8. MBAC simplifies the implementation on transport side because

- Detailed analysis of connections properties (like VLAN, IPsec configuration, etc) is not necessary anymore, because all this can be incorporated in the InitialEstimate factors. These can be quite pessimistic for a first try, because the really consumed bandwidth is measured afterwards and taken in account in the following decisions.
- Deep analysis of IPsec configuration settings is not necessary anymore; in particular, there is no need to find out the number of IPsec padding bytes used per IP packet

9. MBAC improves key performance

- The decision algorithm is computationally fast because it can avoid time consuming store-and-retrieval processes, hence reduces the time for set-up of a connection

- MBAC is not involved anymore in the release of connections because the freed bandwidth is automatically measured and taken into account afterwards

- Measurement is fast, and computation overhead is low (because sampling rate of the counters is expected to be in the order of several hundred milliseconds).

Benefits of the invention:

1. Its solves all the key problems mentioned, and allows to effectively perform CAC in an environment where QoS is required, like LTE and WCDMA.
2. In addition, MBAC is beneficial because it eases the implementation on transport side (because calculation of IPsec overhead is not necessary anymore).
3. MBAC has a positive effect on improving key performance, because it is computationally fast and hence reduces the time for set-up of a connection.
4. MBAC does not force the operator to configure the "expected average packet size per QCI", which he cannot know at all.

Further advantageous embodiments of the invention may comprise:

- making the decision for CAC based on measuring the traffic load on the transport network, in particular measuring the load per QCI/DSCP value.

- the measurement and decision algorithm may be based on measurement of additional system resources, like CPU load, memory consumption, air interface load, or other system resources.

- the entity to be controlled may be of another kind than transmission bandwidth on the transport net, e.g., radio resources on the air interfaces. Examples (for LTE) are the number of connections, the bandwidth, or number of Primary Resource Blocks consumed for the air interface.

- application to QoS based networks, like for LTE, WCDMA. In particular when QCI levels 1,2,3,4 are used to classify GBR-traffic (like in LTE).

- coupling of factors for initial estimate on network load (or further system resources, like CPU load, memory consumption, etc).

- measurement algorithm (sampling of performance counters, and filtering over time via some kind of filters, like moving-average, exponential moving average, or any other filters).

- avoiding inspection of transport network IPsec settings by using measurement based approach.

List of Abbreviations:

| | |
|---|---|
| 3GPP | 3rd Generation Partnership Project |
| CAC | Call/Connection Admission Control |
| DSCP | Differentiated Service Code Point |
| GBR | Guaranteed Bit Rate |
| GPRS | General Packet Radio Service |
| GTP-U | GPRS Tunneling Protocol (Typ U) |
| IP | Internet Protocol |
| IPSec | IP Security |
| LTE | Long Term Evolution |
| MBAC | Measurement-based Admission Control |
| OAM | Operation, Administration, and Maintenance |
| QCI | Quality Class Indicator |
| QoS | Quality of Service |
| UDP | User Datagram Protocol |
| VLAN | Virtual Local Area Network |
| WCDMA | Wideband Code Division Multiple Access |

**Claims**

1.  A method for processing connection requests for guaranteed bit rate connections in a transport network section of a mobile service network, wherein with a connection request for a guaranteed bit rate connection a required bandwidth and a quality class identifier value are specified on the air interface, the method being carried out by a Transport Admission Control TAC node and comprising the steps of

    - mapping the quality class identifier value of the connection specified on the air interface to a service class identifier value used in the transport network section;
    - determining a value s representing an initial estimate of the respective connection bandwidth required in the transport network section using at least one of the required bandwidth specified for the connection on the air interface and its respective quality class identifier value, wherein s = $\lambda$ * maxBitRateOnAir, and maxBitRateOnAir is a maximum requested bit rate and $\lambda \geq 1$ is a predetermined constant for the quality class identifier value;
    - determining a mean m of a traffic load in the transport network section in a predetermined time period preceding one of the connection requests and a standard deviation $\sigma$ of the traffic load in the transport network section in the predetermined time period; and
    - deciding about acceptance or rejection of the one of the connection requests using the service class identifier value, the value representing an initial estimate of the respective connection bandwidth required in the transport network section, the mean m and the standard deviation $\sigma$, wherein

    it is decided that one of the connection requests is accepted if the following condition is fulfilled:

    $$\frac{T - (m + s + AC)}{\sqrt{\sigma^2 + \beta \times (s^2 + AC^2)}} > \alpha$$

    wherein:

    T is a predetermined threshold; AC is an estimated traffic load due to connection requests accepted in the predetermined time period;
    $\alpha$ and $\beta$ are predetermined constants; and wherein

    it is decided that the one of the connection requests is rejected if the condition is not fulfilled.

2.  The method according to claim 1, wherein the value representing an initial estimate of the respective connection bandwidth required in the transport network section based is the required bandwidth specified for the connection on the air interface multiplied by a factor larger or equal to 1.

3.  The method according to claim 1, wherein the mean and the standard deviation of the traffic load are determined directly or indirectly from measurement values taken from the transport network section.

4.  The method according to claim 3, wherein the measurements take sample values in repeated intervals and the measurement values are combined from one or more sample values taken from one or more intervals.

5.  The method according to any of the preceding claims, wherein several connection requests, which arrive within a decision window are combined and processed as a single connection request.

6.  The method according to any of the claims 1 or 5, wherein one or more existing connections are released in order to provide bandwidth required for the new connection request.

7.  A device comprising means adapted to perform the steps of the method according to any of claims 1 to 6.

8.  The device according to claim 7 integrated or associated with a radio transceiver or a gateway.

9.  A computer program product comprising computer-executable instructions, which when loaded into the memory of and executed by a computer associated with a Transport Admission Control TAC node, cause the TAC node to perform the steps of any of claims 1 to 6.

10. The computer program product according to claim 9 embodied as a computer readable medium comprising a non-volatile memory carrying the computer-executable instructions.

11. A mobile service network comprising the device according to claim 7.

**Patentansprüche**

1. Verfahren zum Verarbeiten von Verbindungsanforderungen für Verbindungen mit garantierter Bitrate in einem Transportnetzwerkabschnitt eines Mobildienstnetzwerks, wobei mit einer Verbindungsanforderung für eine Verbindung mit garantierter Bitrate eine erforderliche Bandbreite und ein Qualitätsklassen-Identifikatorwert an der Luftschnittstelle spezifiziert werden, wobei das Verfahren durch einen Transport-Admission-Control-TAC-Knoten durchgeführt wird und die folgenden Schritte umfasst:

   - Abbilden des Qualitätsklassen-Identifikatorwerts der Verbindung, der an der Luftschnittstelle spezifiziert wurde, auf einen Dienstklassen-Identifikatorwert, der in dem Transportnetzwerkabschnitt verwendet wird;
   - Bestimmen eines Werts s, der eine Vorabschätzung der jeweiligen Verbindungsbandbreite repräsentiert, die in dem Transportnetzwerkabschnitt erforderlich ist, mithilfe von wenigstens einem aus der erforderlichen Bandbreite, die für die Verbindung an der Luftschnittstelle spezifiziert wurde, und ihrem jeweiligen Qualitätsklassen-Identifikatorwert, wobei $s = \lambda * maxBitRateOnAir$, und wobei maxBitRateOnAir eine maximal angeforderte Bitrate ist und $\lambda \geq 1$ eine vorbestimmte Konstante für den Qualitätsklassen-Identifikatorwert ist;
   - Bestimmen eines Mittelwerts m einer Verkehrsbelastung in dem Transportnetzwerkabschnitt in einem vorbestimmten Zeitraum, der einer der Verbindungsanforderungen vorangeht, und einer Standardabweichung $\sigma$ der Verkehrsbelastung in dem Transportnetzwerkabschnitt in dem vorbestimmten Zeitraum; und
   - Entscheiden über die Annahme oder Ablehnung von einer der Verbindungsanforderungen mithilfe des Dienstklassen-Identifikatorwerts, des Werts, der eine Vorabschätzung der jeweiligen Verbindungsbandbreite repräsentiert, die in dem Transportnetzwerkabschnitt erforderlich ist, des Mittelwerts m und der Standardabweichung $\sigma$, wobei

   entschieden wird, dass eine der Verbindungsanforderungen angenommen wird, wenn die folgende Bedingung erfüllt ist:

$$\frac{T - (m + s + AC)}{\sqrt{\sigma^2 + \beta \times (s^2 + AC^2)}} > \alpha$$

   wobei:

   T ein vorbestimmter Schwellenwert ist; AC eine geschätzte Verkehrsbelastung aufgrund der in dem vorbestimmten Zeitraum angenommenen Verbindungsanforderungen ist; $\alpha$ und $\beta$ vorbestimmte Konstanten sind; und wobei entschieden wird, dass eine der Verbindungsanforderungen abgelehnt wird, wenn die Bedingung nicht erfüllt ist.

2. Verfahren nach Anspruch 1, wobei der Wert, der eine Vorabschätzung der jeweiligen Verbindungsbandbreite repräsentiert, die in dem Transportnetzwerkabschnitt erforderlich ist, auf der für die Verbindung an der Luftschnittstelle spezifizierten erforderlichen Bandbreite, multipliziert mit einem Faktor von größer oder gleich 1, basiert.

3. Verfahren nach Anspruch 1, wobei der Mittelwert und die Standardabweichung der Verkehrsbelastung direkt oder indirekt auf Basis von Messwerten bestimmt werden, die aus dem Transportnetzwerkabschnitt ermittelt wurden.

4. Verfahren nach Anspruch 3, wobei die Messungen Abtastwerte in wiederholten Intervallen ermitteln und die Messwerte von einem oder mehreren Abtastwerten kombiniert werden, die in einem oder mehreren Intervallen ermittelt wurden.

5. Verfahren nach einem der vorhergehenden Ansprüche, wobei mehrere Verbindungsanforderungen, die innerhalb eines Entscheidungsfensters eintreffen, kombiniert werden und als eine einzige Verbindungsanforderung verarbeitet werden.

**6.** Verfahren nach einem der Ansprüche 1 oder 5, wobei eine oder mehrere bestehende Verbindungen aufgelöst werden, um Bandbreite bereitzustellen, die für die Verbindungsanforderung erforderlich ist.

**7.** Vorrichtung, umfassend Mittel, die geeignet sind, die Schritte des Verfahrens nach einem der Ansprüche 1 bis 6 durchzuführen.

**8.** Vorrichtung nach Anspruch 7, die in ein Funkgerät oder ein Gateway integriert ist oder diesem zugeordnet ist.

**9.** Computerprogrammprodukt, umfassend computerausführbare Anweisungen, die, wenn sie in den Speicher eines einem Transport-Admission-Control-TAC-Knoten zugeordneten Computers geladen werden und von diesem ausgeführt werden, den TAC-Knoten dazu veranlassen, die Schritte nach einem der Ansprüche 1 bis 6 durchzuführen.

**10.** Computerprogrammprodukt nach Anspruch 9, das als computerlesbares Medium verkörpert ist, das einen nichtflüchtigen Speicher umfasst, der die computerausführbaren Anweisungen trägt.

**11.** Mobildienstnetzwerk, umfassend die Vorrichtung nach Anspruch 7.

**Revendications**

**1.** Un procédé de traitement de demandes de connexion pour des connexions à débit binaire garanti dans une section de réseau de transport d'un réseau de service mobile, dans lequel, avec une demande de connexion relative à une connexion à débit binaire garanti, une bande passante requise et une valeur d'identifiant de classe de qualité sont spécifiées sur l'interface hertzienne, le procédé étant exécuté par un noeud de commande d'admission de transport, TAC, et comprenant les étapes suivantes :

- la mise en correspondance de la valeur d'identifiant de classe de qualité de la connexion spécifiée sur l'interface hertzienne avec une valeur d'identifiant de classe de service utilisée dans la section de réseau de transport,
- la détermination d'une valeur s représentant une estimation initiale de la bande passante de connexion respective exigée dans la section de réseau de transport au moyen d'au moins un élément parmi la bande passante requise spécifiée pour la connexion à l'interface hertzienne et sa valeur d'identifiant de classe de qualité res-pective,
où s = $\lambda$ * maxBitRateOnAir, et maxBitRateOnAir est un débit binaire exigé maximal et $\lambda \geq 1$ est une constante prédéterminée pour la valeur d'identifiant de classe de qualité,
- la détermination d'une moyenne m d'une charge de trafic dans la section de réseau de transport au cours d'une période temporelle prédéterminée qui précède une des demandes de connexion et d'un écart standard $\sigma$ de la charge de trafic dans la section de réseau de transport au cours de la période temporelle prédéterminée, et
- la décision d'accepter ou de rejeter ladite une des demandes de connexion au moyen de la valeur d'identifiant de classe de service, de la valeur représentant une estimation initiale de la bande passante de connexion respective exigée dans la section de réseau de transport, de la moyenne m et de l'écart standard $\sigma$, où

il est décidé qu'une des demandes de connexion est acceptée si la condition suivante est satisfaite :

$$\frac{T - (m + s + AC)}{\sqrt{\sigma^2 + \beta \times (s^2 + AC^2)}} > \alpha$$

dans laquelle :

T est un seuil prédéterminé, AC est une charge de trafic estimée due à des demandes de connexion acceptées au cours de la période temporelle prédéterminée,
$\alpha$ et $\beta$ sont des constantes prédéterminées, et où

il est décidé que ladite une des demandes de connexion est rejetée si la condition n'est pas satisfaite.

**2.** Le procédé selon la revendication 1, dans lequel la valeur représentant une estimation initiale de la bande passante de connexion respective exigée dans la section de réseau de transport est la bande passante requise spécifiée pour la connexion à l'interface hertzienne multipliée par un facteur supérieur ou égal à 1.

**3.** Le procédé selon la revendication 1, dans lequel la moyenne et l'écart standard de la charge de trafic sont déterminés directement ou indirectement à partir de valeurs de mesure prises à partir de la section de réseau de transport.

**4.** Le procédé selon la revendication 3, dans lequel les mesures prennent des valeurs échantillons dans des intervalles répétés et les valeurs de mesure sont combinées à partir d'une ou de plusieurs valeurs échantillons prises à partir d'un ou de plusieurs intervalles.

**5.** Le procédé selon l'une quelconque des revendications précédentes, dans lequel plusieurs demandes de connexion, qui arrivent à l'intérieur d'une fenêtre de décision, sont combinées et traitées sous la forme d'une demande de connexion unique.

**6.** Le procédé selon l'une quelconque des revendications 1 ou 5, dans lequel une ou plusieurs connexions existantes sont libérées afin de fournir la bande passante requise pour la nouvelle demande de connexion.

**7.** Un dispositif comprenant un moyen adapté de façon à exécuter les étapes du procédé selon l'une quelconque des revendications 1 à 6.

**8.** Le dispositif selon la revendication 7 intégré ou associé à un émetteur-récepteur radio ou une passerelle.

**9.** Un produit de programme informatique comprenant des instructions exécutables par ordinateur, qui, lorsqu'elles sont chargées dans la mémoire de et exécutées par un ordinateur associé à un noeud de commande d'admission de transport, TAC, amènent le noeud TAC à exécuter les étapes selon l'une quelconque des revendications 1 à 6.

**10.** Le produit de programme informatique selon la revendication 9 incorporé sous la forme d'un support lisible par ordinateur comprenant une mémoire non volatile contenant les instructions exécutables par ordinateur.

**11.** Un réseau de service mobile comprenant le dispositif selon la revendication 7.

Figure 1

EP 2 829 111 B1

Figure 2

Figure 3

Fig. 5

Current Load (sampled values)

Release counter

Admission counter

Set-up counter

Set-up and release Counter values

Time

$t_9$  $t_8$  $t_7$  $t_6$  $t_5$  $t_4$  $t_3$  $t_2$  $t_{-1}$  $t_{0ec}$

Fig. 6

Current Load (sampled values)

Admission counter

Current load

Time

$t_9$  $t_8$  $t_7$  $t_6$  $t_5$  $t_4$  $t_3$  $t_2$  $t_{-1}$  $t_{0ec}$

Fig. 4

OAM

maxTransportCapacity
Thresholds(per cause)
QCI ⇔ DSCP mapping
AdmittanceMode

Measurement Based Admission Control

Measurement Unit

LoadCounter (request)

Admittance Decision

CurrentLoad (per DSCP)

REQUEST transfer rate QCI cause

RESPONSE accept reject

Radio Control

Transport Network Control

26

OAM

maxTransportCapacity
Thresholds(per cause)
QCI ⇔ DSCP mapping
AdmittanceMode

**Measurement
Based
Admission
Control**

First Estimate

Estimate

Radio
Control

REQUEST
(maxBitRate,
QCI,
cause)

RESPONSE
(accept / reject)

Admittance
Decision

CurrentLoad
(per DSCP)

Measurement

Overload
control

RELEASE

LoadCounter
(per DSCP)

Transport Network Control

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 12160190 A
- EP 12160189 A
- GB 2420050 A
- WO 2006042203 A2
- US 20090141731 A1
- EP 1986455 A1
- US 20090003206 A1
- WO 2012145192 A1

**Non-patent literature cited in the description**

- **JAMIN et al.** A Measurement-based Admission Control Algorithm for Integrated Services Packet Networks. *Proc. of the ACM SIGCOMM,* 1995